(19) Europäisches Patentamt
European Patent Office
Office européen des brevets

(11) **EP 4 693 114 A1**

(12) **EUROPEAN PATENT APPLICATION**

(43) Date of publication:
**11.02.2026 Bulletin 2026/07**

(21) Application number: **25187660.3**

(22) Date of filing: **04.07.2025**

(51) International Patent Classification (IPC):
**G06N 10/20** (2022.01)    **G06N 10/60** (2022.01)

(52) Cooperative Patent Classification (CPC):
**G06N 10/20; G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.08.2024 JP 2024129715**

(71) Applicant: **FUJITSU LIMITED**
**Kawasaki-shi, Kanagawa 211-8588 (JP)**

(72) Inventor: **MORITA, Mikio**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING METHOD, AND INFORMATION PROCESSING SYSTEM**

(57)    An information processing program of quantum simulation using a plurality of memories that stores information indicating a quantum state of a composite qubit including a first qubit to which storage position information has been given, causes a first computer to execute, classifying the observables into a first group and a remaining second group, the first group enabling the expected value calculation on the basis of same storage unit calculation in which predetermined arithmetic operation is executed using the composite qubit held by the same memory by replacing the first qubit with any one of second qubits other than the first qubit, and with respect to the observable classified into the first group, giving an instruction on replacement of the first qubit with a predetermined second qubit, and giving an instruction on causing a SWAP gate between the first qubit and the predetermined second qubit to act.

FIG.2

**Description**

FIELD

The embodiments discussed herein are related to an information processing program, an information processing method, and an information processing system.

BACKGROUND

In recent years, studies of quantum computers have been active, and some of the quantum computers are published on a cloud, and an environment in which anyone can use the quantum computers is being prepared. Regarding a quantum computer, while development using a superconducting quantum bit or the like is under way, there is a problem that calculation by an actual machine is affected by noise derived from hardware to make it difficult to obtain a correct calculation result.

In order to advance studies of quantum algorithms under such a situation and to examine an influence of noise, quantum simulation, which is emulation of quantum calculation by a quantum simulator using a classical computer, is performed. Quantum simulation is a technique for simulating quantum calculation by reproducing a quantum state on an ordinary computer and calculating quantum bit interaction or the like.

A state vector system is one of quantum simulation methods. The state vector system quantum simulation has advantages of acquiring intermediate results and implementing a quantum circuit having a large circuit depth. In the state vector system quantum simulation, information indicating all quantum states is held in a memory, and each quantum state is updated according to quantum gate manipulation, thereby simulating quantum calculation. In the state vector system quantum simulation, a quantum state may be held across a plurality of calculation nodes, and in this case, information of the quantum state is held in a distributed manner in the calculation nodes.

A main algorithm verified by the state vector system is a variational quantum algorithm, and this algorithm takes a very long time for emulation because repetitive execution is included. In particular, it is a part related to expected value calculation that takes time.

As a technique for speeding up quantum simulation, a technique has been proposed in which a quantum circuit is updated so as to improve continuity of measurement and manipulation instructions, and simulation is performed while switching arrangement of each element of a stabilizer table on a memory on the basis of the updated quantum circuit.

Patent Literature 1: Japanese Laid-open Patent Publication No. 2023-13672

However, expected value calculation may become a bottleneck in variational quantum algorithm execution in a quantum simulator. In particular, when performing expected value measurement in which a Pauli matrix of X or Y is included in qubits managed across nodes, there is a problem that a large communication overhead occurs to increase calculation time.

In addition, since in a technique of updating a quantum circuit so as to improve continuity of measurement and manipulation instructions, a delay due to communication between calculation nodes is not considered, it is hard to reduce a delay in expected value measurement, and it is therefore difficult to speed up state vector system quantum simulation.

Accordingly, it is desirable to provide an information processing program, an information processing method, and an information processing system that enable speed-up of quantum simulation.

SUMMARY

According to an aspect of an embodiment, an information processing program of quantum simulation using a plurality of memories that stores information indicating a quantum state of a composite qubit including a first qubit to which storage position information has been given. The information processing program causes a first computer to execute a first process and each of a plurality of second computers to execute a second process. The first process includes, with respect to each of a plurality of observables included in a predetermined Hamiltonian in which expected value calculation is performed using the composite qubit, classifying the observables into a first group and a remaining second group, the first group enabling the expected value calculation based on same storage unit calculation in which predetermined arithmetic operation in the expected value calculation is executed using the composite qubit held by the same memory by replacing the first qubit with any one of second qubits other than the first qubit, and with respect to the observable classified into the first group, giving an instruction on replacement of the first qubit with a predetermined second qubit, and giving an instruction on causing a SWAP gate between the first qubit and the predetermined second qubit to act at the time of the expected value calculation. The second process includes calculating an expected value of the Hamiltonian in accordance with the instruction on the replacement and the instruction on the action of the SWAP gate.

BRIEF DESCRIPTION OF DRAWINGS

The invention is described, by way of example only, with reference to the following drawings, in which:

> FIG. 1 is a diagram illustrating an outline of operation of a quantum simulation system according to Example;
> FIG. 2 is a block diagram of the quantum simulation system;
> FIG. 3 is a diagram illustrating calculation of a Pauli matrix;

FIG. 4 is a diagram illustrating a storage state of qubits;

FIG. 5 is a diagram illustrating an example of a combination of qubits for use in calculation of a Pauli matrix of X;

FIG. 6 is a diagram for explaining a qubit group according to Example 1;

FIG. 7 is a diagram illustrating an example of grouping of Hamiltonian groups;

FIG. 8 is a diagram illustrating an example of processing of expected value calculation involving qubit replacement;

FIG. 9 is a flowchart illustrating entire processing of calculating a Hamiltonian expected value;

FIG. 10 is a flowchart of grouping processing of Hamiltonian groups;

FIG. 11 is a flowchart of processing of calculating an expected value of an observable belonging to an H0 group;

FIG. 12 is a flowchart of processing of calculating an expected value of an observable belonging to an H(j+1) group;

FIG. 13 is a flowchart of processing of calculating an expected value of an observable belonging to an H(n-1) group;

FIG. 14 is a diagram illustrating comparison of consumption time for expected value measurement;

FIG. 15 is a diagram for explaining a qubit group according to Example 2; and

FIG. 16 is a diagram of a hardware configuration of a management node and a calculation node.

DESCRIPTION OF EMBODIMENTS

Preferred embodiments of the present invention will be explained with reference to accompanying drawings. Note that the information processing program, the information processing method, and the information processing system disclosed in the present application are not limited by the following Examples.

Example 1

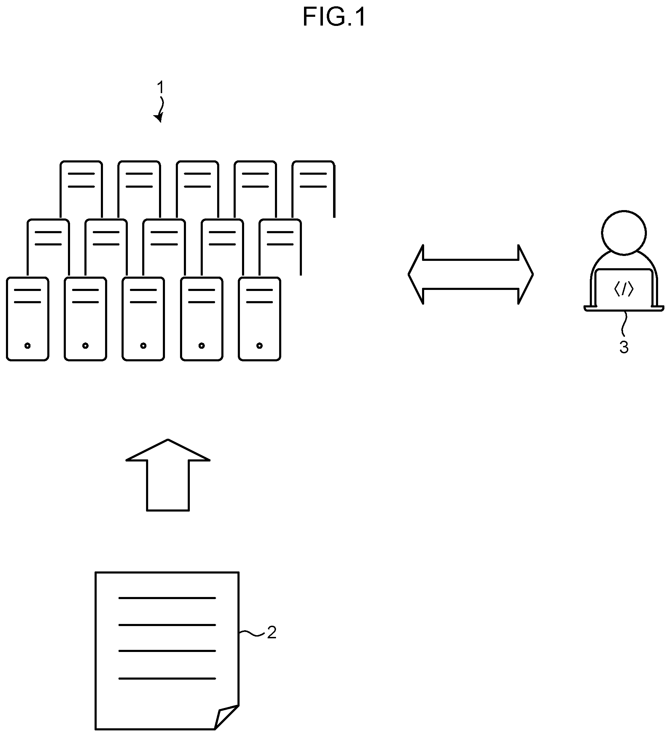

FIG. 1 is a diagram illustrating an outline of operation of a quantum simulation system according to Example. A quantum simulation system 1 may be a high performance computing (HPC) cluster or a system including a plurality of client personal computers (PC). The quantum simulation system 1 has a designated algorithm 2. The algorithm 2 is described, for example, as a program and is installed in the quantum simulation system 1.

A user inputs input information including a wave function, a qubit, and the like to the quantum simulation system 1 using a user terminal device 3. The quantum simulation system 1 executes the quantum simulation according to the algorithm 2 designated using the input information.

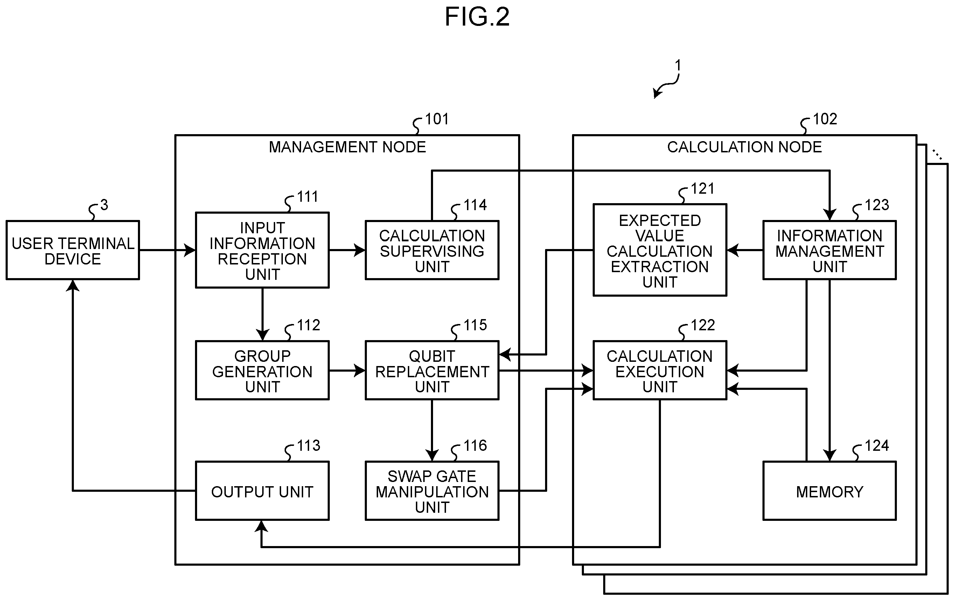

FIG. 2 is a block diagram of the quantum simulation system. The quantum simulation system 1 includes, for example, a management node 101 and a calculation node 102. There are a plurality of the calculation nodes 102. The management node 101 and each calculation node 102 are connected to each other via a network.

The management node 101 performs centralized management of execution of quantum simulation. For example, the management node 101 executes resource management of the calculation nodes 102, memories thereof, and the like for use in the quantum simulation.

The calculation node 102 performs actual calculation in the quantum simulation. The calculation node 102 stores a qubit representing a wave function designated by the management node 101 in the memory.

Here, the qubit, which is also called a quantum bit, is a unit of information for use in a quantum computer, and represents a quantum state. In addition, a huge matrix solved as a problem by a quantum computer is called a Hamiltonian. The Hamiltonian is represented in a form of a sum of observables. The observable indicates a quantum state represented by a plurality of quantum bits, and is represented as a tensor product of a Pauli matrix. The Hamiltonian and the observable are expressed by the following Mathematical Formula 1.

Here, H represents a Hamiltonian. Pi represents an observable. σi represents a Pauli matrix. i indicates a qubit number. The qubit number is a number assigned to a plurality of qubits sequentially from a left end of a bit string as 0, 1, ⋯, and indicates a position of each qubit, the qubits representing a wave function stored in the memory. Here, a bit string of a plurality of qubits representing a wave function is referred to as a "composite qubit".

The calculation node 102 calculates an observable using composite qubits stored in the memory, and finally calculates a Hamiltonian.

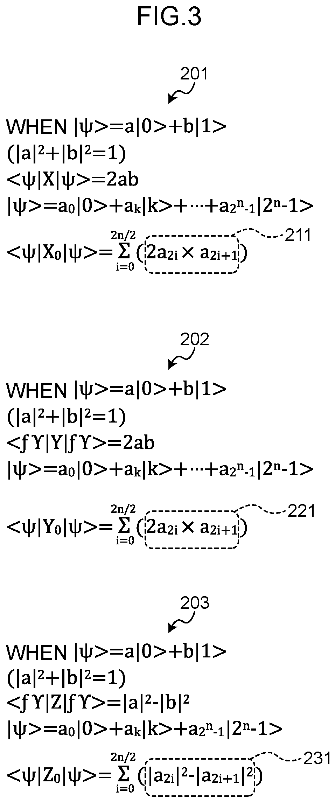

The calculation node 10 performs calculation of a Pauli matrix when performing calculation regarding an observable. The Pauli matrix has Pauli matrices of three axes, X, Y, and Z. FIG. 3 is a diagram illustrating calculation of a Pauli matrix.

Calculation 201 represents calculation of an expected value of a Pauli matrix of X. Calculation 202 represents calculation of an expected value of a Pauli matrix of Y. Calculation 203 represents calculation of an expected value of a Pauli matrix of Z. Here, X0 indicates a

$$H = \sum_a w_a P_a$$

$$P_i = \otimes \sigma_i \qquad \cdots (1)$$

$$\sigma_i \in \{I, X, Y, Z\}$$

Pauli matrix of X of a zeroth qubit. Y0 indicates a Pauli matrix of Y of the zeroth qubit. Z0 indicates a Pauli matrix of Z of the zeroth qubit. Although in the calculations 201 to 203 of FIG. 3, the calculation for the Pauli matrix of the zeroth qubit is illustrated, Pauli matrices of X, Y, and Z are similarly represented for k-th (k=1, 2, ⋯) qubit. In the following, a Pauli matrix of the k-th qubit is denoted as Xk, Yk, or Zk in some cases.

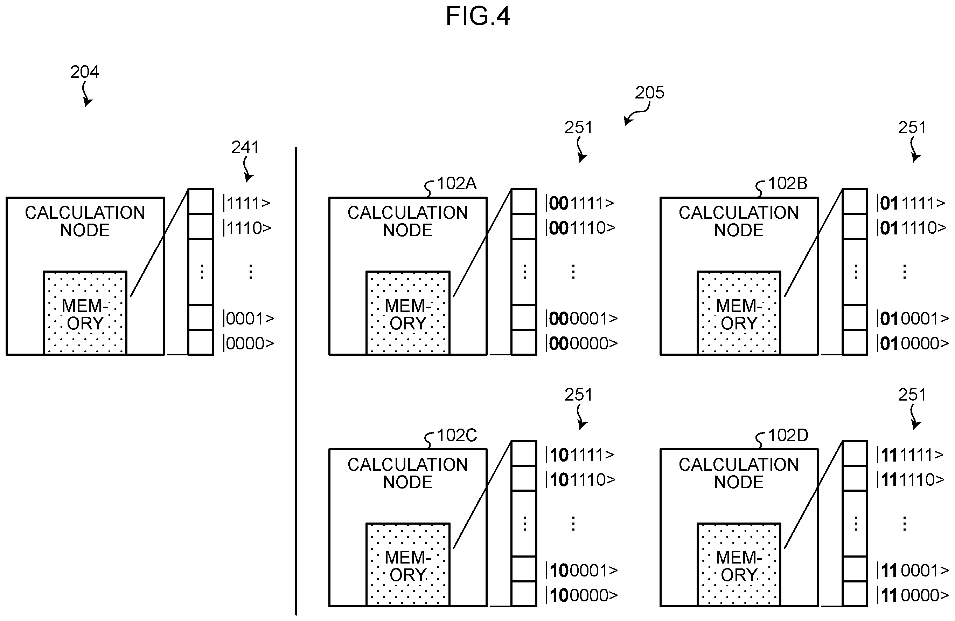

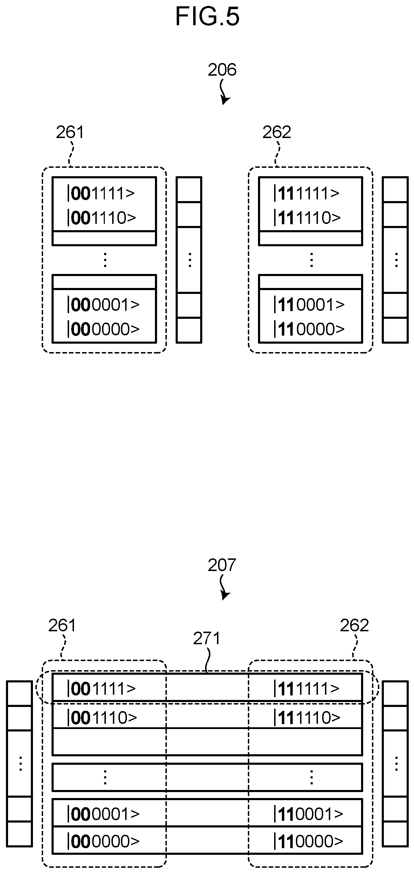

Here, a storage state of a qubit and conventional calculation according to the storage state of the qubit will be briefly described. FIG. 4 is a diagram illustrating a storage state of qubits. FIG. 5 is a diagram illustrating an example of a combination of qubits for use in calculation of a Pauli matrix of X.

A storage state 204 of FIG. 4 represents a storage state of qubits in a case where all the qubits are stored in one calculation node 102. Here, a case where each of composite qubits 241 includes four qubits is illustrated. Each of the composite qubits 241 represents one quantum state derived from a wave function. In a case where all the composite qubits 241 are stored in one calculation node 102, calculation can be performed using the composite qubits 241 without indicating where each composite qubit 241 resides. Therefore, in the storage state 204, each qubit included in the composite qubits stored in the memory can take an appropriate value.

By contrast, a storage state 205 represents a state in a case where composite qubits 251 are stored across four calculation nodes 102, i.e., a plurality of calculation nodes 102A to 102D. Illustrated here is a case where each of the composite qubits 251 includes six qubits. In this case, since calculation is also performed using the respective composite qubits 251 of the calculation nodes 102A to 102D, it is preferable to identify positions where the composite qubits 251 are located. Therefore, the composite qubit 251 has global qubits and local qubits. The global qubit is also responsible for indicating where the composite qubit 251 is located. The local qubit is a qubit which does not indicate the position where the composite qubit 251 is located, but indicates a state of the composite qubit 251 at the position indicated by the global qubit.

Here, among the arrangement of the composite qubits 251, the qubit numbers 0 to 5 are assigned in this order from the right. Then, the qubits with the qubit numbers 4 and 5 correspond to the global qubits, and the qubits with the qubit numbers 0 to 3 correspond to the local qubits. Here, the global qubit of 00 indicates that the calculation node 102A holds the composite qubit 251. The global qubit of 01 indicates that the calculation node 102B holds the composite qubit 251. The global qubit of 10 indicates that the calculation node 102C holds the composite qubit 251. The global qubit of 11 indicates that the qubit calculation node 102D holds the composite qubit 251.

In the storage state 205, when an expected value of a Pauli matrix is calculated for calculating an observable, a storage position of the composite qubit 251 for use in the calculation affects calculation time. Description will be made of, for example, a case where an observable is a Pauli matrix of X of the zeroth qubit. In a case of obtaining an expected value of the Pauli matrix of X of the zeroth qubit, information of the composite qubit 251 having a different zeroth qubit and the remaining qubits of the same value is used as a calculation basis. In other words, the composite qubits 251 with the same global qubits are used for calculation.

A set 261 in FIG. 5 represents the composite qubits 251 held by the calculation node 102A, and a set 262 represents the composite qubits 251 held by the calculation node 102D. In this case, as illustrated in a calculation state 206 of FIG. 5, a multiplication part of the calculation for the expected value of the Pauli matrix of X of the zeroth qubit is performed using the set 261 of the composite qubits 251 held in the calculation node 102A. In addition, a multiplication part of the calculation for the expected value of the Pauli matrix of X of the zeroth qubit is performed using the set 262 of the composite qubits 251 held in the calculation node 102D. Here, the multiplication part of the calculation for the expected value of the Pauli matrix of X corresponds to calculation of a multiplication part 211 of the calculation 201 in FIG. 3. In this case, communication among the calculation nodes 102A to 102D does not occur for the multiplication part of the calculation for the expected value of the Pauli matrix of X.

Referring back to FIG. 4, description will be made of a case where the observable is a Pauli matrix of X of the fourth and fifth qubits. In a case of obtaining an expected value of the Pauli matrix of X of the fourth and fifth qubits, information of the composite qubits 251 having different fourth and fifth qubits and the remaining qubits of the same value is used as the calculation basis. In this case, as a composite qubit set 271 indicated in a calculation state 207 of FIG. 5, a multiplication part of calculation for an expected value of the Pauli matrix of X of the zeroth qubit is performed using the composite qubit 251 of the set 261 and the composite qubit 251 of the set 262. In this case, communication among the calculation nodes 102A to 102D occurs for the multiplication part of the calculation for the expected value of the Pauli matrix of X.

In other words, in a case where an observable is a Pauli matrix of X of a local qubit, a multiplication part of expected value calculation can be calculated by the same calculation node 102. By contrast, in a case where an observable is a Pauli matrix of X of a global qubit, a multiplication part of expected value calculation causes communication between different calculation nodes 102. The same applies not only to X0 but also to Xk. The same applies also to a case of a product of Pauli matrices such as XkXhXm.

The same applies also to a Pauli matrix of Y. A multiplication part of calculation for an expected value of the Pauli matrix of Y is calculation of a multiplication part 221 in the calculation 202 of FIG. 3. In addition, although the calculation 202 is for Y0, the same applies to Yk.

Here, as indicated in the calculation 201 and the calculation 202 of FIG. 3, in the calculation for the expected value of the Pauli matrix of X and the calculation for the expected value of the Pauli matrix of Y, multiplication occupies a large part of the calculation, and addition is small. Therefore, when communication occurs between the calculation nodes 102 in the multiplication parts of the calculation for the expected value of the Pauli matrix of X and the calculation for the expected value of the Pauli matrix of Y, the expected value calculation is delayed.

By contrast, as indicated in an addition part 231 of the calculation 203 of FIG. 3, the calculation for the expected value of the Pauli matrix of Z is a sum of addition parts, and is a combination of additions as a whole. Therefore, for example, even in a case of the storage state 205 in FIG. 4, addition using the qubits stored in the calculation nodes 102A to 102D can be performed first. Therefore, the expected value calculation in a case where the observable is the Pauli matrix of Z does not cause a processing delay.

Therefore, the quantum simulation system 1 according to the present Example executes the following processing in order to improve efficiency in calculating expected values of Pauli matrices of X and Y. Here, a global qubit corresponds to an example of a "first qubit". In addition, a local qubit corresponds to an example of a "second qubit". In other words, the quantum simulation system 1 executes quantum simulation using a plurality of memories 124 that stores a composite qubit including the first qubit to which storage position information has been given. In the following, details of the operation of the quantum simulation system 1 according to the present Example will be described.

Returning to FIG. 2, the description will be continued. The management node 101 includes an input information reception unit 111, a group generation unit 112, an output unit 113, a calculation supervising unit 114, a qubit replacement unit 115, and an SWAP gate manipulation unit 116.

The input information reception unit 111 receives the input information input by a user from the user terminal device 3. Here, the input information includes, for example, the algorithm 2, information of a Hamiltonian and a quantum circuit, a wave function via a qubit and an ansatz. Ansatz is a quantum circuit for generating a quantum state for use in quantum calculation. Then, the input information reception unit 111 outputs the input information to the calculation supervising unit 114. The input information reception unit 111 also outputs the information of the Hamiltonian included in the input information to the group generation unit 112.

The calculation supervising unit 114 has hardware information such as the number of the calculation nodes 102 and a capacity of the memory 124 of each calculation node 102 in advance. Then, the calculation supervising unit 114 acquires the input information from the input information reception unit 111.

The calculation supervising unit 114 decides calculation to be executed by each of the calculation nodes 102 by using the algorithm 2, the quantum circuit information, and the hardware information, and generates a calculation code for each of the calculation nodes 102. The calculation supervising unit 114 also decides a composite qubit to be held by each of the calculation nodes 102 according to the calculation to be executed by each of the calculation nodes 102. Thereafter, the calculation supervising unit 114 transmits the calculation code, and the information of the complex qubit to be held and the wave function to each of the calculation nodes 102.

The group generation unit 112 receives an input of the information of the Hamiltonian from the input information reception unit 111. Then, the group generation unit 112 acquires all observables included in the Hamiltonian.

In addition, the group generation unit 112 has in advance the number of global qubits and the number of local qubits in one composite qubit. The group generation unit 112 also has in advance a predetermined number of qubits, which is the number of qubits to be included in each group in a case of grouping the local qubits.

The group generation unit 112 groups the local qubits by the predetermined number of qubits to generate qubit groups. At this time, the group generation unit 112 excludes the remainder of the local qubits from the qubit groups after grouping by the predetermined number of qubits. In other words, the number of the qubit groups is the largest integer equal to or less than a value obtained by dividing the number of the local qubits by the predetermined number of qubits. Hereinafter, the number of qubit groups is referred to as "the number of groups".

In the present Example, the group generation unit 112 is designated in advance by the algorithm 2 to set the number of the qubit groups to the predetermined number of qubits. Specifically, the group generation unit 112 groups the qubits included in the composite qubit by the number of the global qubits to generate qubit groups. In this case, the number of groups is the largest integer equal to or less than a value obtained by dividing the number of the local qubits by the number of the global qubits.

For example, in a case where the number of the global qubits is N and the number of the local qubits is M, the group generation unit 112 generates ceil $(M/N)$ qubit groups. Here, ceil represents a ceiling function that outputs the largest integer for a given real number.

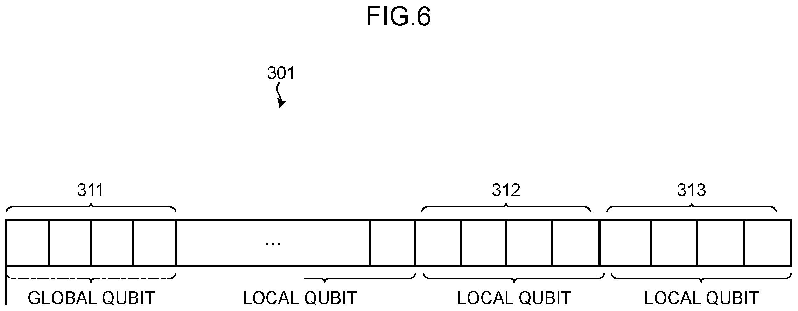

FIG. 6 is a diagram for explaining a qubit group according to Example 1. Description will be made of a case where a composite qubit 301 is provided with four global qubits as indicated in a set 311. In this case, the group generation unit 112 groups local qubits of the composite qubit 301 by four. For example, the group generation unit 112 generates qubit groups by collecting four qubits each from the right of the respective qubits of the composite qubit.

For example, the group generation unit 112 generates qubit groups by setting a set 313 of local qubits as one qubit group and setting a set 312 of local qubits as the next one qubit group. Here, the group generation unit 112 divides the local qubits by four, and excludes the remainder less than four local qubits from the qubit groups.

In this case, the number of groups is the largest integer equal to or less than a value obtained by dividing the number of the local qubits by four. For example, in a case where the number of the local qubits is ten, a quotient of ten divided by four, which is two, is the number of groups.

Next, the group generation unit 112 sequentially allocated numbers to the qubit groups starting from one. For example, in a case of the composite qubit 301 in FIG. 6, the group generation unit 112 sequentially repeats setting the group number of the qubit group corresponding to the set 313 to the first and setting the group number of the qubit group corresponding to the set 312 to the second. In this case, the number of the qubit group closest to the global qubit is the number of groups.

Next, the group generation unit 112 sequentially selects one observable at a time, and executes the following group decision processing for each observable. The group generation unit 112 determines whether the observable includes a Pauli matrix of X or a Pauli matrix of Y of the global qubit or not. In a case where a Pauli matrix of X or a Pauli matrix of Y of the global qubit is not included, the group generation unit 112 puts the observable into a H0 Hamiltonian group. For the observable belonging to the H0 Hamiltonian group, no communication occurs between the calculation nodes 102 in the calculation of the multiplication part of the Pauli matrix of X or Y in the expected value calculation.

On the other hand, in a case where a Pauli matrix of X or a Pauli matrix of Y of the global qubit is included, the group generation unit 112 performs the following processing. When the local qubit of each qubit group is replaced with the global qubit, the group generation unit 112 determines whether or not it is possible to calculate a multiplication part of observable expected value calculation in the same calculation node 102. Here, performing the calculation of the multiplication part of the observable expected value calculation at the same calculation node 102 is referred to as "same storage unit calculation".

In the present Example, the group generation unit 112 searches for a qubit group in which all of the Pauli matrices of X or the Pauli matrices of Y of the included local qubits are not included in the observable among the qubit groups. In a case where such a qubit group exists, the group generation unit 112 determines that the same storage unit calculation is possible by replacing the local qubit of the qubit group with the global qubit. In a case where such a qubit group does not exist, the group generation unit 112 determines that the calculation in the same calculation node 102 is difficult even by replacing the local qubit of the qubit group with the global qubit.

In a case where the same storage unit calculation is possible, the group generation unit 112 adds an observable to a Hamiltonian group to which a group number of the qubit group to be replaced is allocated. For example, in a case where the number of the qubit group to be replaced is the first, the group generation unit 112 adds the observable to an H1 Hamiltonian group.

In a case where it is difficult to perform the same storage unit calculation even when the local qubit is replaced with the global qubit of any qubit group, the group generation unit 112 puts the observable into a Hamiltonian group to which a number obtained by adding one to the group number is allocated. In other words, the number of Hamiltonian groups is a number obtained by adding two to the number of groups.

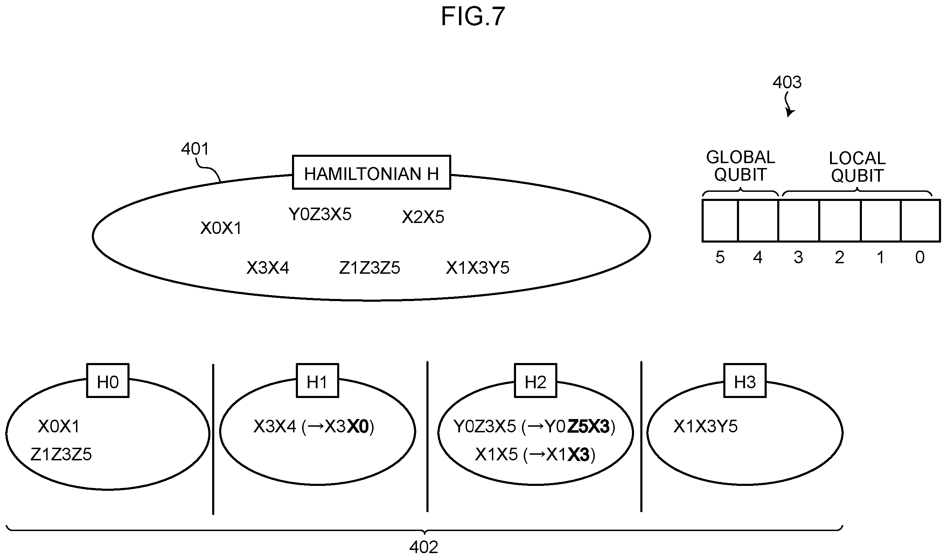

FIG. 7 is a diagram illustrating an example of grouping of Hamiltonian groups. FIG. 7 illustrates a schematic example 403 of a composite qubit for use in this description. In this case, the composite qubit includes five qubits. As illustrated in the schematic example 403, a qubit number is allocated to each qubit. Among them, fourth and fifth qubits are global qubits, and zeroth to third qubits are local qubits. In addition, the predetermined number of qubits is two, which is the same as the number of global qubits. Specifically, the zeroth and first local qubits, and the second and third local qubits each form a qubit group. For example, the group generation unit 112 acquires an observable included in a Hamiltonian 401.

Furthermore, X0 to X5 in FIG. 7 represent Pauli matrices of X of the zeroth to fifth qubits, respectively. Y0 to Y5 represent Pauli matrices of Y of the zeroth to fifth qubits, respectively. Z0 to Z5 represent Pauli matrices of Z of the zeroth to fifth qubits, respectively. For example, an observable denoted as X0X1 indicates that the observable includes the Pauli matrices of X of the zeroth and first qubits.

In this case, the group generation unit 112 adds an observable not including a Pauli matrix of X or Y of the global qubit to the H0 Hamiltonian group. For example, in a case of the observable represented as X0X1, since the observable does not include Pauli matrices of X or Y of the fourth and fifth qubits which are the globable qubits, the group generation unit 112 adds the observable to the H0 Hamiltonian group.

In addition, the group generation unit 112 adds, to the H1 Hamiltonian group, an observable that includes a Pauli matrix of X or Y of the global qubit and does not include Pauli matrices of X or Y of the zeroth and first local qubits. The H1 Hamiltonian group is a group of observables enabling the same storage unit calculation by replacing the global qubits with the zeroth and first local qubits. For example, an observable denoted as X3X4 includes a Pauli matrix of X of the fourth global qubit and does not include a Pauli matrix of X or Y of the zeroth and first local qubits. Therefore, the group generation unit 112 adds the observable denoted as X3X4 to the H1 Hamiltonian group.

In addition, the group generation unit 112 adds, to an H2 Hamiltonian group, an observable that includes a Pauli matrix of X or Y of the global qubit and does not include Pauli matrices of X or Y of the second and third local qubits. The H2 Hamiltonian group is a group of observables enabling the same storage unit calculation by replacing the global qubits with the second and third local qubits. For example, an observable denoted as Y0Z3X5 includes a Pauli matrix of X of the fifth global qubit and does not include Pauli matrices of X or Y of the second and third local qubits. Therefore, the group generation unit 112 adds the observable denoted as Y0Z3X5 to the H2 Hamiltonian group. Thus, a Pauli matrix of Z may be included anywhere.

In addition, the group generation unit 112 adds the remaining observable not belonging to any of the H0 to H2 Hamiltonian groups to an H3 Hamiltonian group. The H3 Hamiltonian group is a group of observable making the same storage unit calculation difficult even with qubit replacement. For example, in a case of an observable denoted as X1X3Y5, even when any of the zeroth and first, or second and third local qubits are replaced with the global qubits, the global qubit includes a Pauli matrix of X or Y. Therefore, the group generation unit 112 adds the observable to the H3 Hamiltonian group.

As described above, the group generation unit 112 completes a grouping 402 of Hamiltonian groups of the observables. Here, like the H1 and H2 Hamiltonian groups, a Hamiltonian group enabling the same storage unit calculation by replacing a global qubit with a local qubit of any one of the qubit groups corresponds to an example of a "first group". Like the H0 and H3 Hamiltonian groups, a Hamiltonian group making difficult the same storage unit calculation even by replacing a global qubit with a local qubit of any one of the qubit groups corresponds to an example of a "second group". Specifically, with respect to each of a plurality of observables included in a predetermined Hamiltonian in which the expected value calculation is performed using the composite qubits, the group generation unit 112 classifies the Hamiltonian groups into the first group and a remaining second group, the first group enabling the expected value calculation on the basis of the same storage unit calculation in which predetermined arithmetic operation in the expected value calculation is executed using the composite qubit held by the same storage unit by replacing the first qubit with any one of the second qubits other than the first qubit.

Furthermore, processing of the classification includes processing of dividing the second qubits into a plurality of qubit groups, extracting an observable in which the predetermined arithmetic operation in the expected value calculation is performed using the first qubit, and in a case where with respect to each extracted observable, the same storage unit calculation is possible by replacing the second qubit included in the qubit group with the first qubit on the qubit group basis, classifying the extracted observable into the first group, and with respect to an observable classified into the first group, classifying, as the predetermined second qubit, the second qubit included in the qubit group enabling the expected value calculation on the basis of the same storage unit calculation by replacement by the first qubit. The processing of the classification further includes processing of classifying each of the extracted observables into the first group in a case where there is a qubit group that is not for use in the predetermined arithmetic operation in the expected value calculation. The processing of the classification further includes processing of collecting observables having the same position in the composite qubit inf the qubit group enabling the expected value calculation based on the same storage unit calculation by replacement with the first qubit, thereby generating a plurality of groups.

Returning to FIG. 2, the description will be continued. The group generation unit 112 outputs information on the Hamiltonian group to which each observable belongs, i.e., the number of the Hamiltonian group, to the qubit replacement unit 115.

The qubit replacement unit 115 receives an input of the information on the Hamiltonian group to which each observable belongs from the group generation unit 112. Next, the qubit replacement unit 115 receives an inquiry about qubit replacement for calculation of an expected value of an observable from each calculation node 102.

The qubit replacement unit 115 determines to which Hamiltonian group the inquired observable belongs. In a case where the observable belongs to the H0 or the (the number of groups +1)-th Hamiltonian group, the qubit replacement unit 115 notifies the calculation node 102 that no qubit replacement is to be performed for the observable.

On the other hand, in a case where the observable belongs to a Hamiltonian group other than the H0 or the (the number of groups +1)-th Hamiltonian group, the qubit replacement unit 115 acquires information of a qubit group in which replacement with the global qubit is performed, the qubit group having been decided at the time of classification into the Hamiltonian groups. A qubit included in the qubit group in which qubit replacement with the global qubit is performed and which is decided at the time of classification into the Hamiltonian groups is referred to as "in-group qubit".

Then, the qubit replacement unit 115 instructs the calculation node 12 to execute replacement of the global qubit with the in-group qubit with respect to the inquired observable. The qubit replacement unit 115 also instructs the calculation node 12 to again execute replacement of the global qubit with the in-group qubit after calculating the expected value of the inquired observable. By executing the qubit replacement again, the qubit replacement unit 115 returns the information of the qubits to the original configuration. Furthermore, the qubit replacement unit 115 outputs information of the in-group qubit for the inquired observable to the SWAP gate manipulation unit 116.

Here, the in-group qubit replacing the global qubit corresponds to an example of a "predetermined second qubit". Specifically, with respect to the observable classified into the first group, the qubit replacement unit 115 gives an instruction on replacement of the first qubit with the predetermined second qubit at the time of expected value calculation. In addition, the instruction on replacement includes, for each Hamiltonian group, processing of giving an instruction on replacement of the first qubit with the predetermined second qubit with respect to the observable belonging to the Hamiltonian group. The instruction on replacement also includes processing of giving an instruction on another replacement of the first qubit with the predetermined second qubit with respect to the observable classified into the first group after the expected value calculation.

The SWAP gate manipulation unit 116 receives, from the qubit replacement unit 115, input of the information of the in-group qubit regarding the inquired observable. Then, the SWAP gate manipulation unit 116 instructs the calculation node 12 on the action of the SWAP gate from the in-group qubit to the global qubit at the time of calculating an expected value of the inquired observable. The SWAP gate manipulation unit 116 also instructs the calculation node 12 to cause the SWAP gate to act again from the in-group qubit to the global qubit after calculating the expected value of the inquired observable. By causing the SWAP gate to act again, the SWAP gate manipulation unit 116 returns the quantum circuit to an original configuration.

Thus, with respect to the observable classified into the first group, the SWAP gate manipulation unit 116 gives an instruction to cause the SWAP gate between the first qubit and the predetermined second qubit to act at the time of calculation of the expected value. In addition, the instruction on the action of the SWAP gate includes processing of, for each Hamiltonian group, giving an instruction on the action of the SWAP gate between the first qubit and the predetermined second qubit with respect to the observable belonging to the Hamiltonian group. The instruction on the action of the SWAP gate also includes processing of giving an instruction to cause the SWAP gate between the first qubit and the predetermined second qubit to act again with respect to the observable classified into the first group after the expected value calculation.

The output unit 113 acquires a Hamiltonian calculation result from the calculation node 102. Then, the output unit 113 outputs the acquired calculation result to the user terminal device 3.

Next, the calculation node 102 will be described. As illustrated in FIG. 2, the calculation node 102 includes an expected value calculation extraction unit 121, a calculation execution unit 122, an information management unit 123, and a memory 124.

The information management unit 123 receives the calculation code, information of a complex qubit to be held and the wave function from the calculation supervising unit 114 of the management node 101. Next, the information management unit 123 stores the composite qubit in the memory 124. Next, the information management unit 123 outputs the calculation code to the expected value calculation extraction unit 121 and the calculation execution unit 122.

The expected value calculation extraction unit 121 receives an input of the calculation code from the information management unit 123. Then, the expected value calculation extraction unit 121 extracts an expected value calculation of an observable from the calculation code. Thereafter, the expected value calculation extraction unit 121 outputs, to the qubit replacement unit 115 of the management node 101, an inquiry about qubit replacement for each expected value calculation of an observable that is the target of the extracted expected value calculation.

The calculation execution unit 122 receives an input of the calculation code from the information management unit 123. The calculation execution unit 122 also receives, from the qubit replacement unit 115 of the management node 101, a notification as to whether or not to perform replacement of a global qubit with an in-group qubit for the calculation of the expected value of the observable. The calculation execution unit 122 also receives, from the SWAP gate manipulation unit 116, an instruction to again replace a global qubit with an in-group qubit after calculating the expected value of the observable in which replacement has been performed.

In addition, the calculation execution unit 122 receives, from the SWAP gate manipulation unit 116, an instruction on the action of the SWAP gate from the in-group qubit to the global qubit at the time of calculating the expected value of the observable in which replacement of the global qubit with the in-group qubit is performed. The calculation execution unit 122 also receives, from the SWAP gate manipulation unit 116, an instruction to cause the SWAP gate from the in-group qubit to the global qubit to act again after calculation of the expected value of the observable in which the qubit replacement has been performed.

Thereafter, the calculation execution unit 122 starts execution of calculation according to the calculation code. The calculation execution unit 122 executes the calculation while communicating with another calculation node 102 using the composite qubit stored in the memory 124.

Here, when executing the calculation of an expected value of the observable whose qubit replacement is designated, the calculation execution unit 122 replaces the global qubit with the in-group qubit. Furthermore, the calculation execution unit 122 causes the SWAP gate between the in-group qubit and the global qubit to act. Then, the calculation execution unit 122 executes the calculation of an expected value of the observable. After completion of the calculation of an expected value of the observable, the calculation execution unit 122 causes the SWAP gate between the in-group qubit and the global qubit to act. In other words, the calculation execution unit 122 returns the quantum circuit to an original state. The calculation of an expected value by the calculation execution unit 122 corresponds to measurement of an expected value in the quantum calculation.

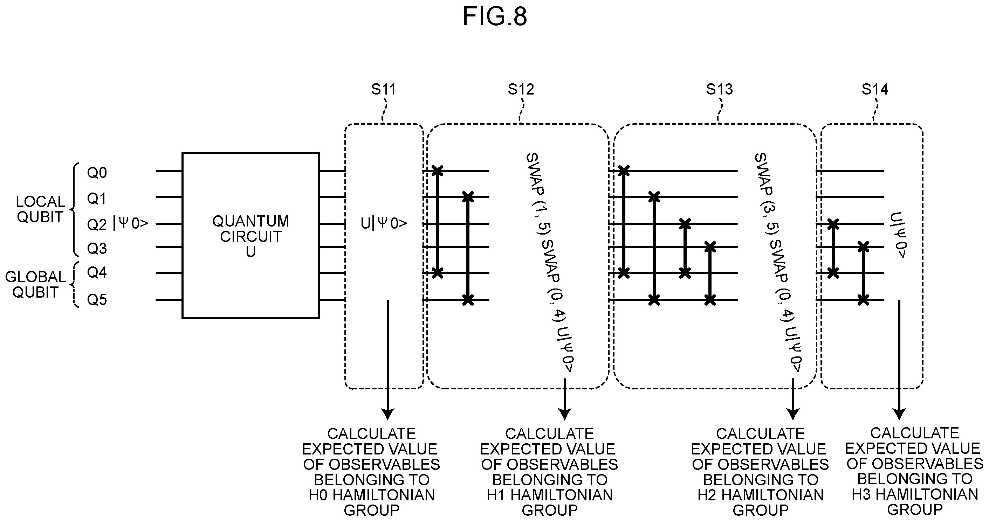

FIG. 8 is a diagram illustrating an example of processing of expected value calculation involving qubit replacement. Here, description will be made of a case of executing calculation to cause qubits Q0 to Q5 to act on a wave function Ψ0 using a quantum circuit U. The qubits Q0 to Q3 are zeroth to third qubits, respectively, and are local qubits. The qubits Q4 to Q5 are fourth and fifth qubits, respectively, and are global qubits. Here, description will be made of a case where the observables are divided into the H0 to H3 Hamiltonian groups. The H1 Hamiltonian group uses the zeroth and first qubits as in-group qubits. The H2 Hamiltonian group uses the second and third qubits as in-group qubits.

The calculation execution unit 122 of each calculation node 102 executes calculation on the qubits Q0 to Q5 using the quantum circuit U. It is assumed here that calculation of expected values of observables belonging to the Hamiltonian groups is performed in the order of H0 to H3. For the observables belonging to the H0 Hamiltonian group, the calculation execution unit 122 executes the expected value calculation using the quantum circuit U as it is with the qubits as they are without performing the qubit replacement (Step S11).

Next, for calculation of an expected value of an observable belonging to the H1 Hamiltonian group, the calculation execution unit 122 replaces the qubit Q0 with the qubit Q4 and replaces the qubit Q1 with the qubit Q5. Furthermore, the calculation execution unit 122 causes a SWAP gate between the qubit Q0 and the qubit Q4 to act. The calculation execution unit 122 also causes a SWAP gate between the qubit Q1 and the qubit Q5 to act. In FIG. 6, the quantum circuit U in which the SWAP gate between the qubit Q0 and the qubit Q4 is caused to act and the SWAP gate between the qubit Q1 and the qubit Q5 is caused to act is expressed as "SWAP(1,5) SWAP(0,4) U". Then, the calculation execution unit 122 executes the expected value calculation of the observable belonging to the H1 Hamiltonian group (Step S12).

Next, the calculation execution unit 122 causes the SWAP gate between the qubit Q0 and the qubit Q4 to act and the SWAP gate between the qubit Q1 and the qubit Q5 to act, thereby restoring the quantum circuit U. Next, for calculation of an expected value of an observable belonging to the H2 Hamiltonian group, the calculation execution unit 122 replaces the qubit Q2 with the qubit Q4 and replaces the qubit Q3 with the qubit Q5. Furthermore, the calculation execution unit 122 causes a SWAP gate between the qubit Q2 and the qubit Q4 to act. The calculation execution unit 122 also causes a SWAP gate between the qubit Q3 and the qubit Q5 to act. In FIG.

6, the quantum circuit U in which the SWAP gate between the qubit Q2 and the qubit Q4 is caused to act and the SWAP gate between the qubit Q3 and the qubit Q5 is caused to act is expressed as "SWAP(3,5) SWAP(2,4) U". Then, the calculation execution unit 122 executes the expected value calculation of the observable belonging to the H2 Hamiltonian group (Step S13).

Next, the calculation execution unit 122 causes the SWAP gate between the qubit Q2 and the qubit Q4 to act and the SWAP gate between the qubit Q3 and the qubit Q5 to act, thereby restoring the quantum circuit U. Then, for the observable belonging to the H3 Hamiltonian group, the calculation execution unit 122 executes the expected value calculation using the quantum circuit U as it is with the qubits as they are without performing the qubit replacement (Step S14).

Returning to FIG. 2, the description will be continued. When the calculation according to the calculation code is completed, the calculation execution unit 122 transmits the calculation result to the output unit 113 of the management node 101. Here, when putting the calculation results together, as a representative, one of the calculation nodes 102 may transmit information obtained by collecting the calculation results in each calculation node 102 to the output unit 113 of the management node 101.

Thus, the calculation execution unit 122 calculates a Hamiltonian expected value in accordance with the instruction from the qubit replacement unit 115 and the SWAP gate manipulation unit 116.

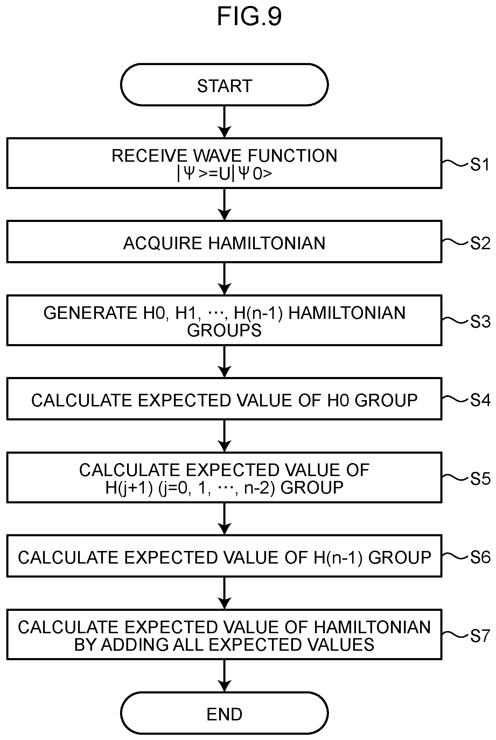

FIG. 9 is a flowchart illustrating entire processing of calculating a Hamiltonian expected value. Next, an overall flow of the expected value calculation processing will be described with reference to FIG. 9.

The input information reception unit 111 receives a wave function $|Ψ>=U|Ψ0>$ that has passed through the ansats (Step S1). Here, U represents a quantum circuit, Ψ represents a wave function, and Ψ0 represents a wave function in an initial state. Specifically, the wave function Ψ is obtained by causing the quantum circuit U to act on the wave function Ψ0 in an initial state.

Furthermore, the input information reception unit 111 acquires an Hamiltonian (Step S2). Here, the Hamiltonian is assumed to be $H=ΣW_iP_i$. $P_i$ represents an observable. Here, description will be made assuming that the number of observables is Ob.

Next, the group generation unit 112 generates H0, H1, ···, and H(n-1) Hamiltonian groups (Step S3). Here, the H0, H1, ···, and H(n-1) Hamiltonian groups are referred to as an H0 group, an H1 group, ···, and an H(n-1) group, respectively. In this case, the number of groups is n-2. Then, the qubit replacement unit 115 instructs the calculation execution unit 122 to perform qubit replacement according to the Hamiltonian group. In addition, the SWAP gate manipulation unit 116 instructs the calculation execution unit 122 on the action of the SWAP gate according to the qubit replacement.

The calculation execution unit 122 calculates an expected value of an observable belonging to the H0 group (Step S4).

Next, the calculation execution unit 122 calculates an expected value of an observable belonging to an H(j+1) (j=0, 1, $\cdots$ n-2) group (Step S5).

Next, the calculation execution unit 122 calculates an expected value of an observable belonging to the H(n-1) group (Step S6).

Then, the calculation execution unit 122 calculates an expected value of the Hamiltonian by adding the expected values calculated at the respective calculation nodes 102 (Step S7).

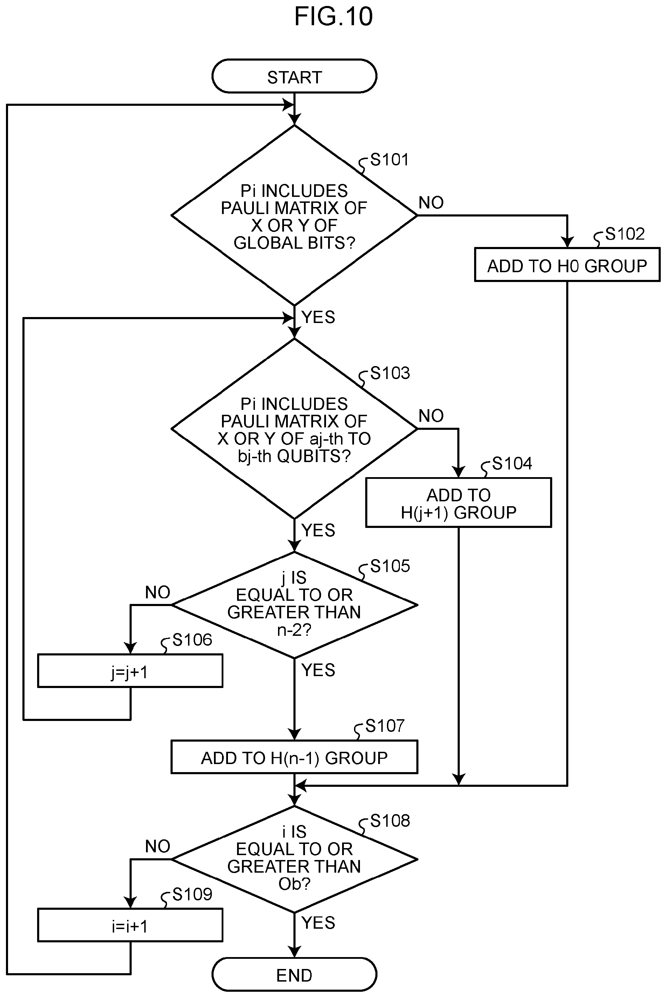

FIG. 10 is a flowchart of grouping processing of Hamiltonian groups. FIG. 10 corresponds to an example of the processing executed in Step S3 of FIG. 9. Next, a flow of the grouping processing of the Hamiltonian groups will be described with reference to FIG. 10. Before the start of this flow, i is initialized and set to one, and j is set to initialized zero.

The group generation unit 112 determines whether or not the observable Pi includes a Pauli matrix of X or Y of global bits (Step S101). When the observable Pi does not include the Pauli matrix of X or Y of the global bits (Step S101: No), the group generation unit 112 adds the observable Pi to the H0 group (Step S102).

By contrast, in a case where the observable Pi includes the Pauli matrix of X or Y of the global bits (Step S101: Yes), the group generation unit 112 executes the following processing. The group generation unit 112 determines whether or not the observable Pi includes a Pauli matrix of X or Y of aj-th to bj-th qubits (Step S103). Here, aj = j $\times$ the predetermined number of qubits, and bj = ((j+1) $\times$ the predetermined number of qubits) -1.

In a case where the observable Pi does not include a Pauli matrix of X or Y of the aj-th to bj-th qubits (Step S103: No), the group generation unit 112 adds the observable Pi to the H(j+1) group (Step S104).

By contrast, in a case where the observable Pi includes the Pauli matrix of X or Y of the aj-th to bj-th qubits (Step S103: Yes), the group generation unit 112 determines whether or not j is equal to or greater than n-2 which is the number of groups (Step S105).

In a case where j is less than n-2 which is the number of groups (Step S105: No), the group generation unit 112 increments j by one (Step S106).

By contrast, in a case where j is equal to or greater than n-2 which is the number of groups (Step S105: Yes), the group generation unit 112 adds the observable Pi to the H(n-1) group (Step S107).

Next, the group generation unit 112 determines whether i is equal to or greater than Ob which is the number of the observables Pi included in the Hamiltonian (Step S108).

In a case where i is less than Ob (Step S108: No), the group generation unit 112 increments i by one (Step S109). Thereafter, the group generation unit 112 returns to Step S101. By contrast, in a case where i is equal to or greater than Ob (Step S108: Yes), the group generation unit 112 ends the grouping processing of the Hamiltonian groups.

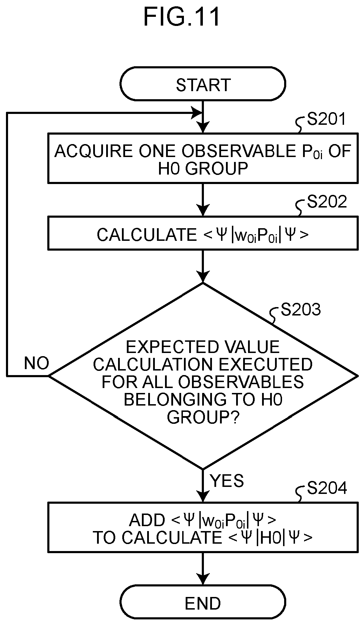

FIG. 11 is a flowchart of processing of calculating an expected value of an observable belonging to the H0 group. FIG. 11 corresponds to an example of the processing executed in Step S4 of FIG. 9. Next, with reference to FIG. 11, a flow of the processing of calculating an expected value of an observable belonging to the H0 group will be described.

The calculation execution unit 122 acquires one observable $P_{0i}$ of the H0 group (Step S201).

Next, the calculation execution unit 122 calculates $<\Psi|W_{0i}P_{0i}|\Psi>$, which is an expected value of the observable $P_{0i}$ (Step S202).

Next, the calculation execution unit 122 determines whether or not expected value calculation has been executed for all the observables belonging to the H0 group (Step S203). In a case where there remains an observable for which the expected value calculation is yet to be executed (Step S203: No), the calculation execution unit 122 returns to Step S201.

By contrast, in a case where the expected value calculation has been executed for all the observables belonging to the H0 group (Step S203: Yes), the calculation execution unit 122 executes the following processing. The calculation execution unit 122 adds the calculated $<\Psi|w_{0i}P_{0i}|\Psi>$ to calculate $<\Psi|H0|\Psi>$, which is the expected value of the H0 group (Step S204).

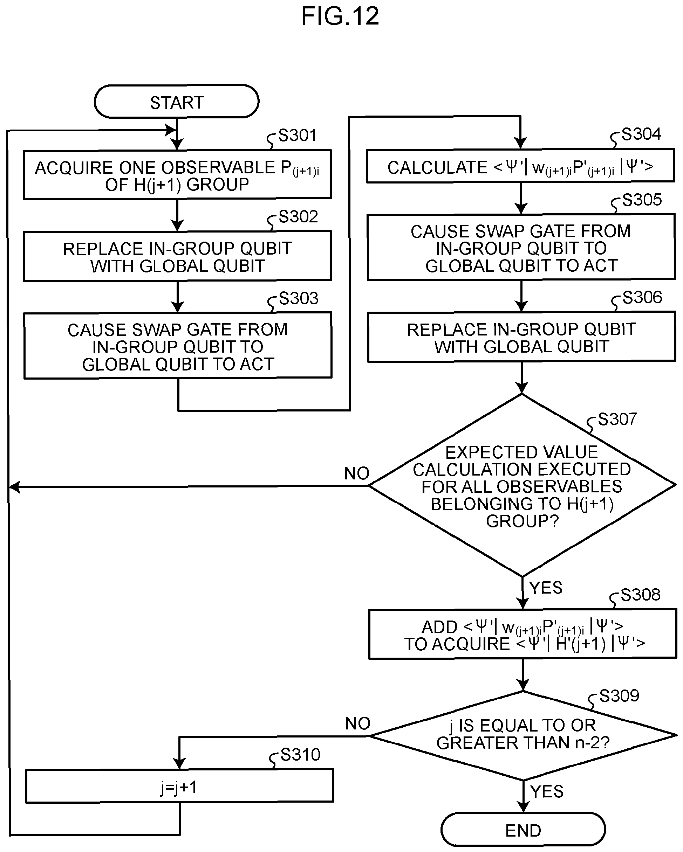

FIG. 12 is a flowchart of processing of calculating an expected value of an observable belonging to the H(j+1) group. FIG. 12 corresponds to an example of the processing executed in Step S5 of FIG. 9. Next, with reference to FIG. 12, a flow of the processing of calculating an expected value of an observable belonging to the H(j+1) group will be described. Here, before the start of this flow, j is initialized and set to zero.

The calculation execution unit 122 acquires one observable $P_{(j+1)i}$ of the H(j+1) group (Step S301).

Next, the calculation execution unit 122 replaces an in-group qubit with a global qubit (Step S302). The in-group qubits in the H(j+1) group are the aj-th to bj-th qubits. Here, an observable after the qubit replacement is performed on $P_{(j+1)i}$ is represented as $P'_{(j+1)i}$.

Next, the calculation execution unit 122 causes a SWAP gate between the in-group qubit and the global qubit to act on the quantum circuit U (Step S303). Here, a wave function after the SWAP gate is acted is expressed as $|\Psi'>$.

Next, the calculation execution unit 122 calculates $<\Psi'|w_{(j+1)i}P'_{(j+1)i}|\Psi'>$, which is an expected value of the observable $P'_{(j+1)i}$ (Step S304).

Next, the calculation execution unit 122 causes the SWAP gate between the in-group qubit and the global qubit to act on the quantum circuit U to restore the wave function (Step S305).

Next, the calculation execution unit 122 replaces the in-group qubit with the global qubit, and restore the qubit (Step S306).

Next, the calculation execution unit 122 determines whether or not expected value calculation has been executed for all the observables belonging to the H(j+1) group (Step S307). When there remains an observable for which the expected value calculation is yet to be executed (Step S307: No), the calculation execution unit 122 returns to Step S301.

By contrast, in a case where the expected value calculation has been executed for all the observables belonging to the H(j+1) group (Step S307: Yes), the calculation execution unit 122 adds $<\Psi|w_{(j+1)i}P'_{(j+1)i}|\Psi'>$, which is the calculated expected value of the observable $P'_{(j+1)i}$. As a result, the calculation execution unit 122 calculates $<\Psi'|H'(j+1)|\Psi'>$, which is an expected value of an H'(j+1) group (Step S308).

Thereafter, the calculation execution unit 122 determines whether or not j is equal to or greater than n-2 (Step S309).

In a case where j is less than n-2 (Step S309: No), the calculation execution unit 122 increments j by one (Step S310). Thereafter, the calculation execution unit 122 returns to Step S301. By contrast, in a case where j is equal to or greater than n-2 (Step S309: yes), the calculation execution unit 122 ends the processing of calculating the expected value of the observable belonging to the H(j+1) group.

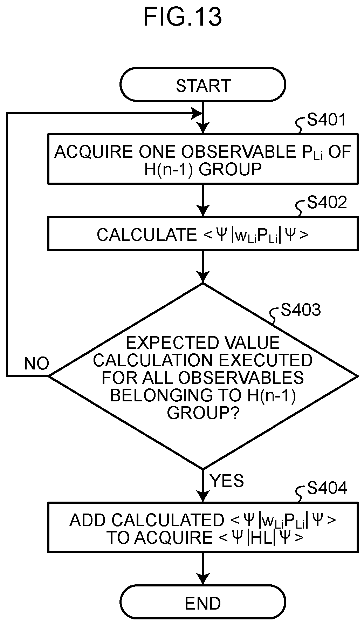

FIG. 13 is a flowchart of processing of calculating an expected value of an observable belonging to the H(n-1) group. FIG. 13 corresponds to an example of processing executed in Step S6 of FIG. 9. Next, with reference to FIG. 13, a flow of the processing of calculating an expected value of an observable belonging to the H(n-1) group will be described.

The calculation execution unit 122 acquires one observable $P_{Li}$ of the H(n-1) group (Step S401).

Next, the calculation execution unit 122 calculates $<\Psi|w_{Li}P_{Li}|\Psi>$, which is an expected value of the observable $P_{Li}$ (Step S402).

Next, the calculation execution unit 122 determines whether or not expected value calculation has been executed for all the observables belonging to the H(n-1) group (Step S403). In a case where there remains an observable for which the expected value calculation is yet to be executed (Step S403: No), the calculation execution unit 122 returns to Step S401.

By contrast, when the expected value calculation has been executed for all the observables belonging to the H(n-1) group (Step S403: Yes), the calculation execution unit 122 executes the following processing. The calculation execution unit 122 adds the calculated $<\Psi|w_{Li}P_{Li}|\Psi>$ to calculate $<\Psi|HL|\Psi>$, which is an expected value of the H(n-1) group (Step S404).

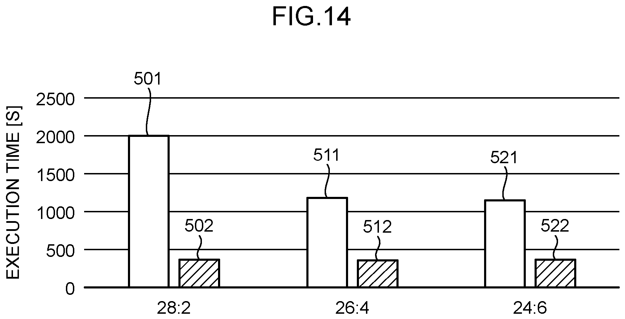

FIG. 14 is a diagram illustrating comparison of consumption time for expected value measurement. Here, with reference to FIG. 14, consumption time for expected value measurement is compared between a case where no qubit replacement is performed and a case where the quantum simulation system 1 according to Example 1 is used. FIG. 14 is a comparison in a case where a qubit problem is solved.

In FIG. 14, the vertical axis represents execution time, and the horizontal axis represents a ratio of local qubits to global qubits. Graphs 501 and 502 illustrate results in a case where a ratio of local qubits to global qubits is 28:2. Graphs 511 and 512 illustrate results in a case where a ratio of local qubits to global qubits is 26:4. Graphs 521 and 522 illustrate results in a case where a ratio of local qubits to global qubits is 24:6.

The graphs 501, 511, and 521 represent consumption times for expected value measurement in a case where no qubit replacement is performed. The graphs 502, 512, and 522 represent consumption times for expected value measurement in a case where the quantum simulation system 1 according to Example 1 is used. In any case, the consumption time for the expected value measurement is greatly shortened in the case where the quantum simulation system 1 according to Example 1 is used as compared with the case where no qubit replacement is performed. In addition, the larger the local qubit, the greater an effect of reduction in the consumption time for the expected value measurement.

As described in the foregoing, the quantum simulation system 1 groups the observables included in the Hamiltonian depending on whether or not the same calculation node 102 can perform calculation by replacing a global qubit with a local qubit. Furthermore, the quantum simulation system 1 groups the observables that can be calculated by the same calculation node 102 into the same group by replacing the local qubit at the same position. Then, when calculating an expected value of the grouped observable, the quantum simulation system 1 replaces an in-group qubit with a global qubit, and causes a SWAP gate between the in-group qubit and the global qubit to act. Then, the quantum simulation system 1 calculates an expected value of the observable.

As a result, communication between the calculation nodes 102 in the expected value calculation can be reduced, and the time for the expected value calculation can be shortened. Therefore, it is possible to speed up state vector system quantum simulation.

Example 2

Next, a quantum simulation system 1 according to Example 2 will be described. The quantum simulation system 1 according to the present Example is also illustrated by the block diagram of FIG. 2. The quantum simulation system 1 according to the present Example is different from that of Example 1 in that local bits are divided by using a number other than the number of global qubits designated by a user as a predetermined number of qubits. Division of the local qubits will be mainly described below. In the following description, description of operation of each unit similar to that of Example 1 may be omitted.

The input information reception unit 111 receives a predetermined number of qubits designated by the user from the user terminal device 3. Then, the input information reception unit 111 outputs the predetermined number of qubits designated by the user to the group generation unit 112.

The group generation unit 112 receives an input of the predetermined number of qubits designated by the user from the input information reception unit 111. Next, the group generation unit 112 groups the local qubits by the predetermined number of qubits.

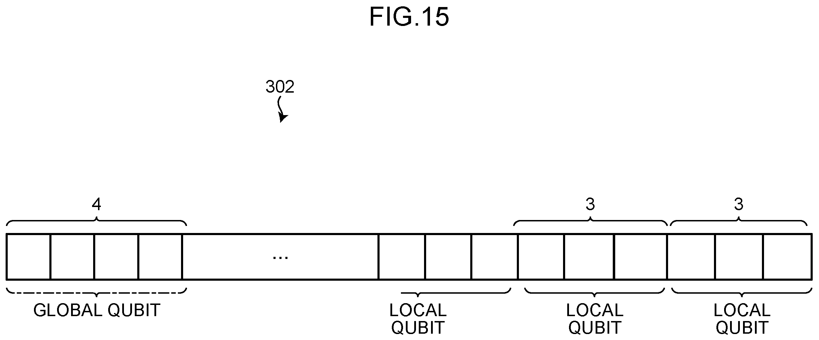

FIG. 15 is a diagram for explaining a qubit group according to Example 2. FIG. 15 illustrates an example of a case where a composite qubit 302 is provided with the number of global qubits is four, and three is designated as the predetermined number of qubits.

The group generation unit 112 arranges qubits included in a composite qubit such that local qubits are provided to the left of the global qubits. Then, the group generation unit 112 generates qubit groups by collecting four local qubits each in order from the right side. Thereafter, the group generation unit 112 groups the observables included in the Hamiltonian into Hamiltonian groups by using the generated qubit groups.

Thus, even by creating a qubit group using, as the predetermined number of qubits, a number other than the number of global qubits, it is possible to execute expected value calculation by qubit replacement. In particular, by reducing the predetermined number of qubits, it is possible to improve a probability that the expected value calculation can be performed in the same calculation node 102 by replacing the qubits even in an observable having many Pauli matrices of X and Y. Therefore, a possibility of being able to shorten the time for expected value calculation is improved, thereby speeding up the state vector system quantum simulation.

Hardware Configuration

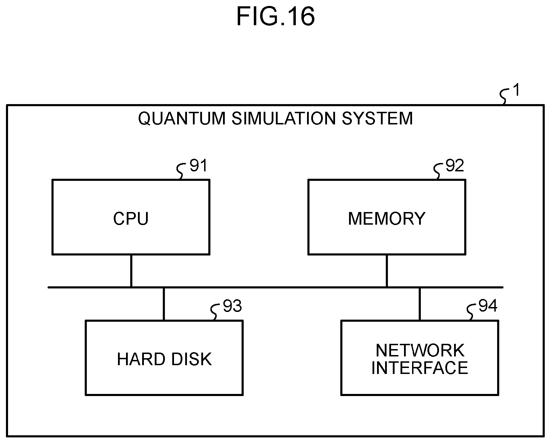

FIG. 16 is a diagram of a hardware configuration of a management node and a calculation node. Next, an example of a hardware configuration for realizing each function of the management node 101 and the calculation node 102 will be described with reference to FIG. 16.

As illustrated in FIG. 16, the management node 101 and the calculation node 102 include, for example, a central processing unit (CPU) 91, a memory 92, a hard disk 93, and a network interface 94. The CPU 91 is connected to the memory 92, the hard disk 93, and the network interface 94 via a bus.

The network interface 94 is an interface for communication with an external device. The network interface 94 relays, for example, communication between the CPU 91 of the management node 101 and the CPU 91 of the calculation node 102. The network interface 94 relays communication between the CPU 91 of the management node 101 and the user terminal device 3. For example, the network interface 94 realizes communication with the user terminal device 3 by the input information reception unit 111 and the output unit 113.

The hard disk 93 is an auxiliary storage device. The hard disk 93 stores various programs including a program described below. In a case of the management node 101, the hard disk 93 stores programs for realizing the functions of the input information reception unit 111, the group generation unit 112, the output unit 113, the calculation supervising unit 114, the qubit replacement unit 115, and the SWAP gate manipulation unit 116 illustrated in FIG. 2. In a case of the calculation node 102, the hard disk 93 stores a program for realizing the functions of the expected value calculation extraction unit 121, the calculation execution unit 122, and the information management unit 123 illustrated in FIG. 2.

The memory 92 is a main storage device. For example, a dynamic random access memory (DRAM) can be used as the memory 92. In the case of the calculation node 102, the memory 92 corresponds to the memory 124.

The CPU 91 reads various programs from the hard disk 93, develops the programs in the memory 92, and executes the programs. As a result, in the case of the management node 101, the CPU 91 realizes the functions of the input information reception unit 111, the group generation unit 112, the output unit 113, the calculation supervising unit 114, the qubit replacement unit 115, and the SWAP gate manipulation unit 116 illustrated in FIG. 2. In the case of the calculation node 102, the CPU 91 realizes the functions of the expected value calculation extraction unit 121, the calculation execution unit 122, and the information management unit 123 illustrated in FIG. 2.

In one aspect, the present invention enables speed-up of quantum simulation.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

**1.** An information processing program of quantum simulation using a plurality of memories that stores information indicating a quantum state of a composite qubit including a first qubit to which storage position information has been given, the information processing program causing, the information processing method being carried out by a first computer (101) and a plurality of second computers (102), the first computer (101) to execute:

with respect to each of a plurality of observables included in a predetermined Hamiltonian in which expected value calculation is performed using the composite qubit, classifying the observables into a first group and a remaining second group, the first group enabling the expected value calculation on the basis of same storage unit calculation in which predetermined arithmetic operation in the expected value calculation is executed using the composite qubit held by the same memory by replacing the first qubit with any one of second qubits other than the first qubit; and
with respect to the observable classified into the first group, giving an instruction on replacement of the first qubit with a predetermined second qubit, and giving an instruction on causing a SWAP gate between the first qubit and the predetermined second qubit to act at the time of the expected value calculation; and
the second computers (102) to execute:
calculating an expected value of the Hamiltonian in accordance with the instruction on the replacement and the instruction on the action of the SWAP gate.

2. The information processing program according to claim 1, wherein
the classification includes:

dividing the second qubits into a plurality of qubit groups;
extracting an observable in which the predetermined arithmetic operation in the expected value calculation is performed using the first qubit;
in a case where with respect to each extracted observable, the same storage unit calculation is possible by replacing the second qubit included in the qubit group with the first qubit on the qubit group basis, classifying the extracted observable into the first group; and
with respect to an observable classified into the first group, classifying, as the predetermined second qubit, the second qubit included in the qubit group enabling the expected value calculation on the basis of the same storage unit calculation by replacement with the first qubit.

3. The information processing program according to claim 2, wherein the classification includes classifying each of the extracted observables into the first group in a case where there is a qubit group that is not for use in the predetermined arithmetic operation in the expected value calculation.

4. The information processing program according to claim 2 or 3, wherein

the classification includes collecting observables having the same position in the composite qubit in the qubit group enabling the expected value calculation based on the same storage unit calculation by replacement with the first qubit, and generating a plurality of groups,
the instruction on the replacement includes, for each of the groups, giving an instruction on the replacement of the first qubit with the predetermined second qubit with respect to the observable belonging to the group, and
the instruction on the action of the SWAP gate includes, for each of the groups, giving an instruction on the action of the SWAP gate between the first qubit and the predetermined second qubit with respect to the observable belonging to the group.

5. The information processing program according to any of the preceding claims, wherein

the instruction on the replacement includes giving an instruction on another replacement of the first qubit with the predetermined second qubit with respect to the observable classified into the first group after the expected value calculation, and
the instruction on the action of the SWAP gate includes giving an instruction to cause the SWAP gate between the first qubit and the predetermined second qubit to act again with respect to the observable classified into the first group after the expected value calculation.

6. The information processing program according to any of the preceding claims, wherein the predetermined arithmetic operation in the expected value calculation is a multiplication part of a Pauli matrix of X or Y in the observable.

7. An information processing method of quantum simulation using a plurality of memories that stores information indicating a quantum state of a composite qubit including a first qubit to which storage position information has been given, wherein,

the first computer (101),
with respect to each of a plurality of observables included in a predetermined Hamiltonian in which expected value calculation is performed using the composite qubit,

classifies the observables into a first group and a remaining second group, the first group enabling the expected value calculation on the basis of same storage unit calculation in which predetermined arithmetic operation in the expected value calculation is executed using the composite qubit held by the same memory by replacing the first qubit with any one of second qubits other than the first qubit, and the first computer (101),

with respect to the observable classified into the first group,

gives an instruction on replacement of the first qubit with a predetermined second qubit, and gives an instruction on causing a SWAP gate between the first qubit and the predetermined second qubit to act at the time of the expected value calculation, and

each of a plurality of second computers (102) executes calculating an expected value of the Hamiltonian in accordance with the instruction on the replacement and the instruction on the action of the SWAP gate.

8. An information processing system (1) having a first information processing device (101), and a plurality of second information devices (102) each having a storage unit that holds information indicating a quantum state of a composite qubit including a first qubit to which storage position information has been given, wherein

the first information processing device (101) includes:

a group generation unit (112) configured to, with respect to each of a plurality of observables included in a predetermined Hamiltonian in which expected value calculation is performed using the composite qubit, classify the observables into a first group and a remaining second group, the first group enabling the expected value calculation on the basis of same storage unit calculation in which predetermined arithmetic operation in the expected value calculation is executed using the composite qubit held by the same memory by replacing the first qubit with any one of second qubits other than the first qubit;

a qubit replacement unit (115) configured to, with respect to the observable classified into the first group, give an instruction on replacement of the first qubit with a predetermined second qubit at the time of the expected value calculation; and

a SWAP gate manipulation unit (116) configured to, with respect to the observable classified into the first group, cause a SWAP gate between the first qubit and the predetermined second qubit to act at the time of the expected value calculation, and

the second information processing device (102) includes:

a calculation execution unit (122) configured to calculate an expected value of the Hamiltonian in accordance with the instruction from the qubit replacement unit (115) and the SWAP gate manipulation unit (116).

# FIG.1

# FIG.2

EP 4 693 114 A1

# FIG.3

201

WHEN $|\psi\rangle = a|0\rangle + b|1\rangle$
$(|a|^2 + |b|^2 = 1)$
$\langle\psi|X|\psi\rangle = 2ab$
$|\psi\rangle = a_0|0\rangle + a_k|k\rangle + \cdots + a_{2^n-1}|2^n-1\rangle$

$$\langle\psi|X_0|\psi\rangle = \sum_{i=0}^{2n/2} (2a_{2i} \times a_{2i+1})$$ —211

202

WHEN $|\psi\rangle = a|0\rangle + b|1\rangle$
$(|a|^2 + |b|^2 = 1)$
$\langle f\Upsilon|Y|f\Upsilon\rangle = 2ab$
$|\psi\rangle = a_0|0\rangle + a_k|k\rangle + \cdots + a_{2^n-1}|2^n-1\rangle$

$$\langle\psi|Y_0|\psi\rangle = \sum_{i=0}^{2n/2} (2a_{2i} \times a_{2i+1})$$ —221

203

WHEN $|\psi\rangle = a|0\rangle + b|1\rangle$
$(|a|^2 + |b|^2 = 1)$
$\langle f\Upsilon|Z|f\Upsilon\rangle = |a|^2 - |b|^2$
$|\psi\rangle = a_0|0\rangle + a_k|k\rangle + a_{2^n-1}|2^n-1\rangle$

$$\langle\psi|Z_0|\psi\rangle = \sum_{i=0}^{2n/2} (|a_{2i}|^2 - |a_{2i+1}|^2)$$ —231

# FIG.4

204

241

CALCULATION NODE

MEMORY

|1111>
|1110>

⋮

|0001>
|0000>

205

251

102A

CALCULATION NODE

MEMORY

|**00**1111>
|**00**1110>

⋮

|**00**0001>
|**00**0000>

251

102B

CALCULATION NODE

MEMORY

|**01**1111>
|**01**1110>

⋮

|**01**0001>
|**01**0000>

251

102C

CALCULATION NODE

MEMORY

|**10**1111>
|**10**1110>

⋮

|**10**0001>
|**10**0000>

251

102D

CALCULATION NODE

MEMORY

|**11**1111>
|**11**1110>

⋮

|**11**0001>
|**11**0000>

# FIG.5

206

261

|$\mathbf{001}$1111>
|$\mathbf{001}$1110>

⋮

|$\mathbf{000}$0001>
|$\mathbf{000}$0000>

262

|$\mathbf{111}$1111>
|$\mathbf{111}$1110>

⋮

|$\mathbf{110}$0001>
|$\mathbf{110}$0000>

207

261　　271　　262

| |$\mathbf{001}$1111>| |$\mathbf{111}$1111>| |
| |$\mathbf{001}$1110>| |$\mathbf{111}$1110>| |
| | | | |
| ⋮ | | ⋮ | |
| |$\mathbf{000}$0001>| |$\mathbf{110}$0001>| |
| |$\mathbf{000}$0000>| |$\mathbf{110}$0000>| |

# FIG.6

301

EP 4 693 114 A1

# FIG.7

403

GLOBAL QUBIT | LOCAL QUBIT

| 5 | 4 | 3 | 2 | 1 | 0 |

401

HAMILTONIAN H

X0X1    Y0Z3X5    X2X5

X3X4    Z1Z3Z5    X1X3Y5

H0
X0X1
Z1Z3Z5

H1
X3X4 (→X3**X0**)

H2
Y0Z3X5 (→Y0**Z5X3**)
X1X5 (→X1**X3**)

H3
X1X3Y5

402

EP 4 693 114 A1

# FIG.8

S11 · S12 · S13 · S14

LOCAL QUBIT: Q0, Q1, Q2 |Ψ0>, Q3
GLOBAL QUBIT: Q4, Q5

QUANTUM CIRCUIT U

U|Ψ0>

SWAP (1, 5) SWAP (0, 4) U|Ψ0>

SWAP (3, 5) SWAP (0, 4) U|Ψ0>

U|Ψ0>

CALCULATE EXPECTED VALUE OF OBSERVABLES BELONGING TO H0 HAMILTONIAN GROUP

CALCULATE EXPECTED VALUE OF OBSERVABLES BELONGING TO H1 HAMILTONIAN GROUP

CALCULATE EXPECTED VALUE OF OBSERVABLES BELONGING TO H2 HAMILTONIAN GROUP

CALCULATE EXPECTED VALUE OF OBSERVABLES BELONGING TO H3 HAMILTONIAN GROUP

EP 4 693 114 A1

## FIG.9

```
                    START

         RECEIVE WAVE FUNCTION
             |Ψ>=U|Ψ0>              ~S1

         ACQUIRE HAMILTONIAN        ~S2

    GENERATE H0, H1, ···, H(n-1) HAMILTONIAN
                GROUPS              ~S3

    CALCULATE EXPECTED VALUE OF H0 GROUP   ~S4

         CALCULATE EXPECTED VALUE OF
         H(j+1) (j=0, 1, ···, n-2) GROUP   ~S5

    CALCULATE EXPECTED VALUE OF H(n-1) GROUP   ~S6

    CALCULATE EXPECTED VALUE OF HAMILTONIAN
       BY ADDING ALL EXPECTED VALUES      ~S7

                    END
```

# FIG.10

START

S101 — Pi INCLUDES PAULI MATRIX OF X OR Y OF GLOBAL BITS?

NO → S102 — ADD TO H0 GROUP

YES

S103 — Pi INCLUDES PAULI MATRIX OF X OR Y OF aj-th TO bj-th QUBITS?

NO → S104 — ADD TO H(j+1) GROUP

YES

S105 — j IS EQUAL TO OR GREATER THAN n-2?

NO → S106 — j=j+1

YES

S107 — ADD TO H(n-1) GROUP

S108 — i IS EQUAL TO OR GREATER THAN Ob?

NO → S109 — i=i+1

YES

END

# FIG.11

START

S201
ACQUIRE ONE OBSERVABLE $P_{0i}$ OF H0 GROUP

S202
CALCULATE $<\Psi|w_{0i}P_{0i}|\Psi>$

S203
EXPECTED VALUE CALCULATION EXECUTED FOR ALL OBSERVABLES BELONGING TO H0 GROUP?

NO

YES

S204
ADD $<\Psi|w_{0i}P_{0i}|\Psi>$
TO CALCULATE $<\Psi|H0|\Psi>$

END

# FIG.12

START

S301
ACQUIRE ONE OBSERVABLE $P_{(j+1)i}$ OF H(j+1) GROUP

S302
REPLACE IN-GROUP QUBIT WITH GLOBAL QUBIT

S303
CAUSE SWAP GATE FROM IN-GROUP QUBIT TO GLOBAL QUBIT TO ACT

S304
CALCULATE $< \Psi' | w_{(j+1)i} P'_{(j+1)i} | \Psi'>$

S305
CAUSE SWAP GATE FROM IN-GROUP QUBIT TO GLOBAL QUBIT TO ACT

S306
REPLACE IN-GROUP QUBIT WITH GLOBAL QUBIT

S307
EXPECTED VALUE CALCULATION EXECUTED FOR ALL OBSERVABLES BELONGING TO H(j+1) GROUP?

NO

YES

S308
ADD $< \Psi' | w_{(j+1)i} P'_{(j+1)i} | \Psi'>$ TO ACQUIRE $< \Psi' | H'(j+1) | \Psi'>$

S309
j IS EQUAL TO OR GREATER THAN n-2?

NO

YES

S310
j=j+1

END

# FIG.13

```
        ┌─────────────┐
        │    START    │
        └─────────────┘
               │
               ▼                    ⌐S401
  ┌────────────────────────────────┐
  │ ACQUIRE ONE OBSERVABLE $P_{Li}$ OF │
  │          H(n-1) GROUP          │
  └────────────────────────────────┘
               │
               ▼                    ⌐S402
  ┌────────────────────────────────┐
  │ CALCULATE $<\Psi|w_{Li}P_{Li}|\Psi>$ │
  └────────────────────────────────┘
               │
               ▼                         ⌐S403
            ╱─────────────────────────╲
          ╱     EXPECTED VALUE          ╲
  NO    ╱   CALCULATION EXECUTED          ╲
 ◄─────╱     FOR ALL OBSERVABLES           ╲
        ╲     BELONGING TO H(n-1)          ╱
          ╲        GROUP?                ╱
            ╲─────────────────────────╱
               │ YES
               ▼                    ⌐S404
  ┌────────────────────────────────┐
  │ ADD CALCULATED $<\Psi|w_{Li}P_{Li}|\Psi>$ │
  │ TO ACQUIRE $<\Psi|HL|\Psi>$    │
  └────────────────────────────────┘
               │
               ▼
        ┌─────────────┐
        │     END     │
        └─────────────┘
```

FIG.14

FIG.15

# FIG.16

QUANTUM SIMULATION SYSTEM 1

CPU 91

MEMORY 92

HARD DISK 93

NETWORK INTERFACE 94

| Europäisches Patentamt European Patent Office Office européen des brevets | **EUROPEAN SEARCH REPORT** | **Application Number** EP 25 18 7660 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YASUNARI SUZUKI ET AL: "Qulacs: a fast and versatile quantum circuit simulator for research purpose", ARXIV.ORG, CORNELL UNIVERSITY LIBRARY, 201 OLIN LIBRARY CORNELL UNIVERSITY ITHACA, NY 14853, 27 November 2020 (2020-11-27), XP081823566, * Title, Abstract * * p2,p4-6,p10,p13-15 * * figure 1 * | 1-8 | INV. G06N10/20 G06N10/60 |
| A | Imamura Satoshi ET AL: "mpiQulacs: A Distributed Quantum Computer Simulator for A64FX-based Cluster Systems", arXiv.org, 30 March 2022 (2022-03-30), pages 1-11, XP093347009, Retrieved from the Internet: URL:https://arxiv.org/pdf/2203.16044 [retrieved on 2025-12-15] * Abstract * * p2-3 * | 4-6 | |
| | | | TECHNICAL FIELDS SEARCHED (IPC) G06N |
| A | PRANAV GOKHALE ET AL: "Minimizing State Preparations in Variational Quantum Eigensolver by Partitioning into Commuting Families", ARXIV.ORG, CORNELL UNIVERSITY LIBRARY, 201 OLIN LIBRARY CORNELL UNIVERSITY ITHACA, NY 14853, 31 July 2019 (2019-07-31), XP081452908, * Abstract * * p3,p6,p12 * | 2-5 | |

-/--

The present search report has been drawn up for all claims

| Place of search | Date of completion of the search | Examiner |
|---|---|---|
| The Hague | 15 December 2025 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 18 7660

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DOI JUN ET AL: "Cache Blocking Technique to Large Scale Quantum Computing Simulation on Supercomputers", 2020 IEEE INTERNATIONAL CONFERENCE ON QUANTUM COMPUTING AND ENGINEERING (QCE), IEEE, 12 October 2020 (2020-10-12), pages 212-222, XP033863178, DOI: 10.1109/QCE49297.2020.00035 [retrieved on 2020-11-13] * Abstract * * p216 * | 4,5 | |
| A | WO 2019/214907 A1 (IBM [US]; IBM UK [GB]) 14 November 2019 (2019-11-14) * the whole document * | 1-8 | |
| | | | TECHNICAL FIELDS SEARCHED (IPC) |

The present search report has been drawn up for all claims

| Place of search | Date of completion of the search | Examiner |
|---|---|---|
| The Hague | 15 December 2025 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 7660

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2025

| Patent document cited in search report | Publication date | Patent family member(s) | | Publication date |
|---|---|---|---|---|
| WO 2019214907 A1 | 14-11-2019 | CN | 112041859 A | 04-12-2020 |
| | | EP | 3791333 A1 | 17-03-2021 |
| | | JP | 7240792 B2 | 16-03-2023 |
| | | JP | 7481075 B2 | 10-05-2024 |
| | | JP | 2021521504 A | 26-08-2021 |
| | | JP | 2022191443 A | 27-12-2022 |
| | | US | 2019347575 A1 | 14-11-2019 |
| | | US | 2021342731 A1 | 04-11-2021 |
| | | WO | 2019214907 A1 | 14-11-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023013672 A